# EUROPEAN PATENT APPLICATION

(11) **EP 1 178 683 A2**
(43) Date of publication of application: **06.02.2002**
(21) Application number: 01306402.7
(22) Date of filing: 26.07.2001
(51) Int. Cl.: H04N 7/15

(54) **Hub for a video conferencing system**

(30) Priority: 31.07.2000 US 628514
(71) Applicant: PictureTel Corporation, Andover, Massachusetts 01810-1031 (US)
(72) Inventor: Bernstein, Jeffrey G., Middleton, MA 01949 (US); Howell, Brian A., Marblehead, MA 01945 (US); Clapp, Craig S.K., Boxford, MA 01921 (US); Nunzio, Napoleone, South Hamilton, MA 01982 (US)
(74) Representative: Horner, Martin Grenville

(57) **Abstract**

According to the principles of the invention, there is provided a system, apparatus, and method for connecting a plurality of input/output devices to a video conferencing terminal (212, 214). A multimedia attachment hub (100, 220, 230) according to the principles of the invention may include a plurality of device ports (105) that are physical ports for a plurality of multimedia devices (222, 224, 226, 228, 232, 234, 236, 238) and a terminal port (115) that is a video conferencing terminal port providing a connection to a video conferencing terminal (212, 214). The hub (100, 220, 230) may include passive or active internal circuitry (110) for connecting the device ports to the terminal port (115). The hub (100) may also include one or more switches that manually override machine-controlled or default connections.

## Description

### Background of The Invention

### 1. Field of the Invention

This application relates to the field of video conferencing, and more particularly to the field of hubs for interconnecting multimedia devices at a video conferencing terminal.

### 2. Description of Related Art

A video conferencing network interconnects a number of video conferencing terminals in a communicating relationship so that each terminal can participate in a video conference. Each video conferencing terminal may include one or more outputs to admit a plurality of devices to be attached thereto, such as computers, data sources, audio inputs, video inputs, audio outputs, video outputs, user interface devices such as digital whiteboards, and so forth.

As a significant disadvantage, each attached device must be connected by a cable to the video conferencing terminal, which may be a large or expensive piece of dedicated hardware located apart from video conference participants. For example, where participants are gathered around a conference room table, the video conferencing terminal may be a desktop computer in a corner of the conference room. In present configurations, each participant wishing to attach a device to the video conferencing terminal must provide a long cable to connect to the terminal. The resulting web of cables may present a mass of wires on a meeting table that is disruptive to the dynamics of the meeting, as well as signal degradation due to electro-magnetic interference.

There remains a need for a device that connects a plurality of multimedia input/output devices to a video conferencing system.

### Summary Of The Invention

According to the principles of the invention, there is provided a system, apparatus, and method for connecting a plurality of input/output devices to a video conferencing terminal. A multimedia attachment hub according to the principles of the invention may include a plurality of device ports that are physical ports for a plurality of multimedia devices, and a terminal port that is a video conferencing terminal port providing a connection to a video conferencing terminal. The hub may include passive or active internal circuitry for connecting the device ports to the terminal port. The hub may also include one or more switches that manually override machine-controlled or default connections.

### Brief Description Of Drawings

The foregoing and other objects and advantages of the invention will be appreciated more fully from the following further description thereof, with reference to the accompanying drawings, wherein:
**Fig. 1** is a block diagram of a multimedia attachment hub according to the principles of the invention; and
**Fig. 2** is a block diagram of a plurality of multimedia attachment hubs in a video conferencing network according to the principles of the invention.

### Detailed Description of Certain Illustrated Embodiment(s)

To provide an overall understanding of the invention, certain illustrative embodiments will now be described, including a multimedia attachment hub for attaching VGA devices to a video conferencing terminal. However, it will be understood by those of ordinary skill in the art that the methods and systems described herein can be suitably adapted to any other multimedia or computing device that might be connected to a video conferencing terminal and used in a video conference. The terms "media" and "multimedia," as used herein, are intended to refer to any of the known media types, individually or collectively, such as motion video, still video, audio, shared data, shared applications, and any other media in open or proprietary standards that may be communicated over a data link or network. Further, as used herein, the term "multimedia device" may refer to a device that sends and/or receives a single media type or a number of media types.

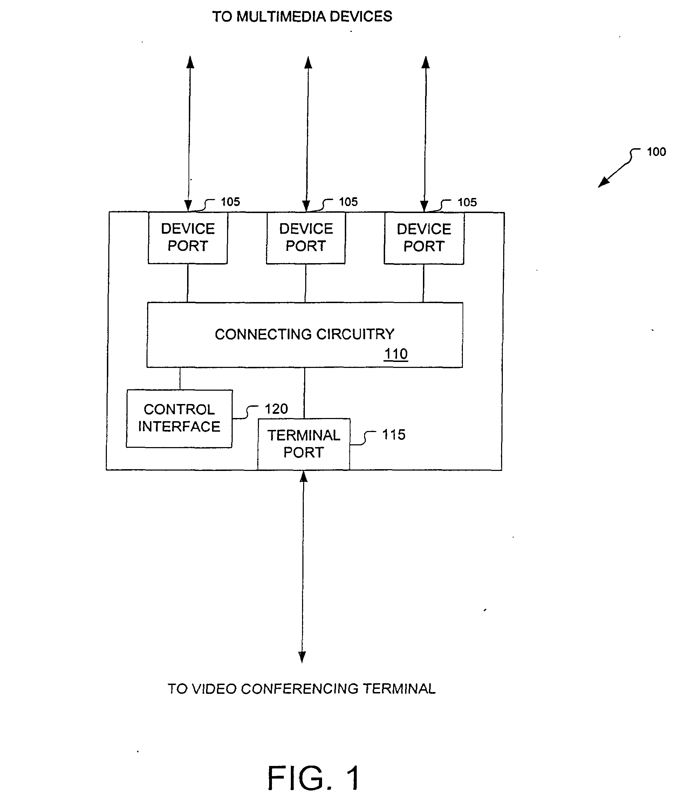

Figure 1 is a block diagram of a multimedia attachment hub according to the principles of the invention. The hub 100 includes a plurality of device ports 105, connecting circuitry 110, a terminal port 115, and a control interface. The control interface 120 may control operation of the connecting circuitry 110 to interconnect the terminal port 115 to one or more of the device ports 105.

Each device port 105 may include a connector for receiving a connection to a multimedia device. Each device port 105 may be, for example, a Video Graphics Array ("VGA") connector, a Super VGA connector, an Extended Graphics Array ("XGA"), a serial port connector, a parallel port connector, a Universal Serial Bus connector, an IEEE 1394 connector (also known as Firewire), an Ethernet connector, or any other type of connector that might be used to interconnect a multimedia device. Multimedia devices that might be connected to one of the device ports 105 may be any input or output device including desktop, laptop, or notebook computers, video screens, projectors, microphones, cameras, speakers, or any other device capable of receiving or sending media in a video conferencing network. These multimedia devices may send and/or receive media such as text, graphics, video, audio, data, and so forth. The hub 100 may include a number of different types of device ports 105 for different types of devices and connections. Physical connections between the device ports 105 and any devices connected thereto may be through wire twisted pairs, coaxial cables, shielded cables, fiber optic cables, or any other connectors capable of carrying data.

The terminal port 115 may be a single connector for connecting to a video conferencing terminal through a wireless or a wired connection. A wired connection may be formed using, for example, a VGA connector or a serial connector, or any of the other connector types mentioned above. A wireless connection may be formed using, for example, Bluetooth, Wireless Ethernet, or any other radio frequency, infrared, or other wireless format. In a wireless embodiment, the terminal port 115 may include circuitry for converting signals between a form used by the device ports 105 and a form suitable for wireless transmission. Any video conferencing terminal may be connected to the terminal port 115, including, for example, an H.323 video conferencing terminal or an H.320 video conferencing terminal.

The connecting circuitry 110 interconnects device ports 105 with the terminal port 115. The connecting circuitry 110 may be entirely passive, including direct wired connections between contacts of the terminal port 115 and contacts of the device ports 105. The connecting circuitry 110 may include signal conditioning circuitry such as electro-static discharge protection, over-voltage or other overload protection, filters, signal conditioning circuitry, amplifiers, attenuators, single-ended to differential signal conversion, differential to single-ended signal coversion, and so forth. The connecting circuitry 110 may include switching circuitry such as switches, time slot interchanges, crosspoint switches, relays, multiplexors, and demultiplexors for forming selective interconnections between the terminal port 115 and the plurality of device ports 105. The switching circuitry may respond to control signals from the control interface 120, from a video conferencing terminal connected to the terminal port 115, or from any device connected to one of the plurality of device ports 105. The connecting circuitry 110 may include conversion circuitry such as analog-to-digital ("A/D") circuitry, digital-to-analog ("D/A") circuitry, and timing circuitry for converting signals compatible with the device ports 105 to and from signals compatible with the terminal port 115. The connecting circuitry 110 may also include a memory for retaining switching circuitry selections, device identification numbers, role information (as will be discussed below), and any other state information which may be usefully retained by the hub 100.

Operation of the hub may be controlled using the control interface 120. The control interface may include control devices responsive to a user, such as buttons, switches, sliders, dials, touch pads, and the like. The control interface 120 may also include outputs such as lights, light-emitting diodes ("LEDs"), Liquid Crystal Displays ("LCDs"), active matrix displays, and the like. The LEDs may indicate, for example, power on, detection of a device connected to a device port, or a role of the hub in a video conference, as will be discussed in more detail below. The connecting circuitry 110 may be connected to the control interface 110, and may respond to user inputs, specified through the control devices, to control operation of the hub 100.

Through the control interface 120, a user may control interconnections formed by the switching circuitry of the connecting circuitry 110. The control interface 120 may also be used to control a role of multimedia devices connected to the device ports 105 within a video conference. For example, the hub 100 may be used in a video conferencing system that employs media role management, in which media streams may be explicitly labeled with a role that describes the function or purpose of the stream, such as "people" or "content." A policy manager in such a system may manage the roles such that a multimedia conference may be more effectively presented to participants. A token management system may also be provided so that control of the multimedia conference roles can be transferred among participants during a conference. In such a role management system, the control interface 120 of the hub 100 may be used, for example, to specify a role of devices connected to the device ports 105 within a video conference, or to obtain and release tokens for the hub 100 and devices connected thereto.

Where a device connected to one of the device ports 105 has role management capabilities as described above, the connecting circuitry 110 may provide automated role management. The connecting circuitry 110 may detect a role for the device when the device is connected, and may transmit a role description for the device to the terminal port 115. A video conferencing terminal connected to the hub 100 may thus detect roles for newly added devices and include these role descriptions in video conferencing network communications. The connecting circuitry 110 may prioritize roles detected from the device ports 105, and assign a single role for the hub 100, or the connecting circuitry 110 may detect a role for each device and transmit these roles separately. The connecting circuitry 110 may also provide a default role that is assigned to devices that do not provide any role management information. A button or other control may be included in the control interface 120 which permits manual override of any automated role detection. The same button, or another button, may further permit explicit hardware specification of a role for any device, or for the hub 100 generally.

In an example embodiment, the hub 100 may include device ports 105 for a single-ended VGA input, a single-ended VGA output, and a single-ended stereo audio input. A button may be included to connect and disconnect the VGA input, or to generate a manual override of other role management information for devices connected to the hub 100. The hub 100 may use differential signals for communicating through the terminal port 115 with a video conferencing terminal, and the connecting circuitry 110 may accordingly include suitable circuitry for converting between these two signal types, such as buffers and differential drivers.

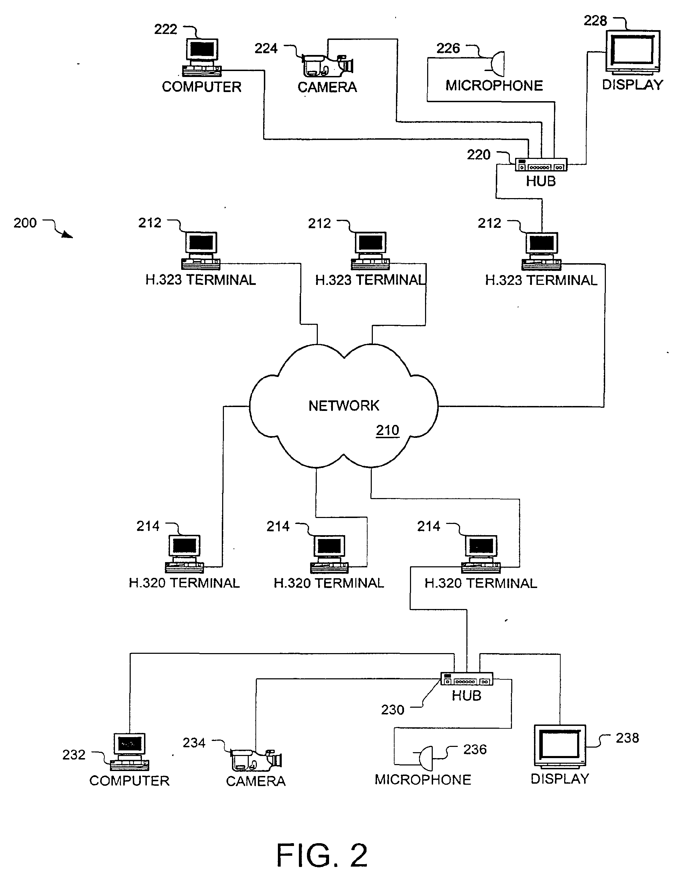

Figure 2 is a block diagram of a plurality of multimedia attachment hubs in a video conferencing network according to the principles of the invention. A video conferencing network 200 may include a network 210 interconnecting a plurality of video conferencing terminals, such as H.323 terminals 212 and H.320 terminals 214. The network 210 may include, for example, a data network such as the Internet, a telecommunications network, or some combination of these interconnected by video conferencing gateways. The network 210 may also include multi-point conference units and any other hardware and software for maintaining video conferences among a plurality of terminals.

One or more of the H.323 terminals may be connected to a multimedia attachment hub such as the hub 100 described with reference to Fig. 1. Such a hub 220 may be connected in a communicating relationship to the H.323 terminal 212, and may be connected in a communicating relationship with one or more of a computer 222, a camera 224, a microphone 226, or a display 228. The computer 222 may be, for example, a laptop computer, a notebook computer, a desktop computer, a workstation, a palm top computer, or any other device with a processor that might send or receive data in a video conference. The camera 224 may be a digital video camera, an analog video camera, or the like, and may be directed at an individual participating in a video conference, a document or other work piece that is the subject of the video conference, a chalkboard or whiteboard, or any other visual subject of interest. The microphone 226 may be any audio transducer, or collection of audio transducers. The display may be a computer such as those described above, or a television, a projector, or any other device for displaying visual images. Other devices, such as speakers, digital whiteboards, or any other input or output device that can be used in a video conference may similarly be attached to the hub 220. The hub 220 may provide connections for each device, and a connection to the terminal 212.

Other multimedia attachment hubs may be connected to video conferencing terminals within the video conferencing system 200. For example, the hub 230 may be connected to an H.320 terminal 214. The hub 230 may be connected to a computer 232, a camera 234, a microphone 236, a display 238, or any of the other devices discussed above.

## Claims

1. A hub for connecting multimedia devices to a video conferencing terminal, the hub comprising:
a plurality of device ports, each device port adapted to receive a connection to a multimedia device;
a terminal port, the terminal port adapted to receive a connection to a video conferencing terminal;
connecting circuitry, the connecting circuitry interconnecting the plurality of device ports and the terminal port in a communicating relationship, the connecting circuitry processing signals received from the plurality of device ports to generate a signal for the terminal port and processing signals received from the terminal port to generate signals for the plurality of device ports.

2. The hub of claim 1, further comprising a control interface connected to the connecting circuitry, the control interface responsive to user inputs to control operation of the connecting circuitry.

3. The hub of claim 1, further comprising a control interface, the control interface responsive to user inputs to control operation of the hub within a video conference.

4. The hub of claim 3, the control interface responsive to a user input to manually override role management settings within the video conference.

5. The hub of claim 1, the connecting circuitry providing automated role management.

6. The hub of claim 1, the connecting circuitry providing automated role detection.

7. The hub of claim 1, the connecting circuitry further comprising circuitry for converting between differential and single-ended signals.

8. The hub of claim 1, the terminal port being adapted for connection to at least one of an H.323 video terminal and an H.320 video terminal.

9. The hub of claim 1, at least one of the device ports comprising a VGA connector.

10. The hub of claim 1, the device ports including at least one of an audio input, a video input, a data input, a text input, and a graphics input.

11. The hub of claim 1, the connecting circuitry further comprising switching circuitry for selectively connecting one or more of the plurality of device ports in a communicating relationship with the terminal port.

12. A hub for connecting multimedia devices to a video conferencing terminal, the hub comprising:
a plurality of first connecting means for connecting to multimedia devices;
a second connecting means for connecting to a video conferencing terminal;
a third connecting means for connecting the plurality of first connecting means to the second connecting means in a communicating relationship.

13. A video conferencing system comprising:
a network;
a plurality of video conferencing terminals connected in a video conference over the network; and
a multimedia attachment hub connected in a communicating relationship with one of the plurality of video conferencing terminals, the multimedia attachment hub including a terminal port for connecting to the one of the plurality of video conferencing terminals, a plurality of device ports for attaching to one or more devices, and connecting circuitry for connecting the plurality of device ports in a communicating relationship with the terminal port.

14. The video conferencing system of claim 13, further comprising a device connected to one of the plurality of device ports, the device being one of a computer, a camera, a microphone, and a display.

15. The video conferencing system of claim 13, wherein the video conference uses role management.

16. The video conferencing system of claim 15, wherein the multimedia attachment hub further comprises a control for manually specifying a role of devices connected to the multimedia attachment hub in the video conference.
